# EUROPEAN PATENT APPLICATION

(11) **EP 4 472 089 A1**
(43) Date of publication of application: **04.12.2024**
(21) Application number: 22923143.6
(22) Date of filing: 09.06.2022
(51) Int. Cl.: H04B 5/00

(54) **DATA TRANSMISSION METHOD, DEVICE, AND STORAGE MEDIUM**

(30) Priority: 29.01.2022 CN 202210113034
(71) Applicant: ZTE Corporation, Shenzhen, Guangdong 518057 (CN)
(72) Inventor: DAI, Bo, Shenzhen, Guangdong 518057 (CN); YU, Guanghui, Shenzhen, Guangdong 518057 (CN); HU, Liujun, Shenzhen, Guangdong 518057 (CN)
(74) Representative: Savi, Massimiliano
(86) International application number: PCT/CN2022/097875
(87) International publication number: WO 2023/142331

(57) **Abstract**

The present application provides a data transmission method, a device, and a storage medium. The data transmission method applied to a first communication node comprises: receiving an energy supply request message sent by a second communication node; and sending an energy supply request response message to the second communication node.

## Description

### CROSS-REFERENCE TO RELATED APPLICATION

This application is filed on the basis of Chinese patent application No. 202210113034.6 filed January 29, 2022, and claims priority to the Chinese patent application, the entire contents of which are incorporated herein by reference.

### TECHNICAL FIELD

The present disclosure relates to the field of communication technologies, and more particularly, to a data transmission method and device, and a storage medium.

### BACKGROUND

Energy harvesting can be applied to wireless communication systems. In the process of energy harvesting, User Equipment (UE) can obtain energy from an external source, such as a base station, through wireless transmission, and convert the obtained energy into electrical energy.

Research on wireless energy and information transmission focuses on the physical design of antennas and Radio Frequency (RF) units to improve the efficiency of simultaneous transmission of wireless energy and information during point-to-point transmission between devices. However, the network cannot learn energy harvesting information of the terminal device, which may result in an inadequate energy supply and the inability to flexibly adjust the energy supply mode according to the state of the terminal device.

### SUMMARY

An embodiment of the present disclosure provides a data transmission method, applied to a first communication node, the method including: receiving an energy supply request message sent by a second communication node; and sending an energy supply request response message to the second communication node.

An embodiment of the present disclosure provides a data transmission method, applied to a fifth communication node, the method including: receiving an energy supply release message or an energy harvesting completion message sent by a second communication node.

An embodiment of the present disclosure provides a data transmission method, applied to a second communication node, the method including: sending an energy supply request message to a first communication node; and receiving an energy supply request response message, an energy supply request confirmation message, or an energy supply request rejection message sent by the first communication node.

An embodiment of the present disclosure provides a data transmission method, applied to a third communication node, the method including: receiving an energy supply request message transmitted by a first communication node; and transmitting an energy supply request response message, an energy supply request confirmation message, or an energy supply request rejection message to the first communication node.

An embodiment of the present disclosure provides a communication device, including: a memory and one or more processors, where the memory is configured for storing one or more programs which, when executed by one or more processors, cause the one or more processors to carry out the method according to any one of the embodiments of the present disclosure.

An embodiment of the present disclosure provides a storage medium, storing a computer program which, when executed by a processor, causes the processor to carry out the method according to any one of the embodiments of the present disclosure.

### BRIEF DESCRIPTION OF DRAWINGS

FIG. 1 is a flowchart of a data transmission method according to an embodiment of the present disclosure;
FIG. 2 is a flowchart of another data transmission method according to an embodiment of the present disclosure;
FIG. 3 is a flowchart of still another data transmission method according to an embodiment of the present disclosure;
FIG. 4 is a flowchart of yet another data transmission method according to an embodiment of the present disclosure;
FIG. 5 is a schematic interaction diagram of an energy supply request according to an embodiment of the present disclosure;
FIG. 6 is another schematic interaction diagram of an energy supply request according to an embodiment of the present disclosure;
FIG. 7 is a schematic interaction diagram of energy supply release according to an embodiment of the present disclosure;
FIG. 8 is another schematic interaction diagram of energy supply release according to an embodiment of the present disclosure;
FIG. 9 is still another schematic interaction diagram of energy supply release according to an embodiment of the present disclosure;
FIG. 10 is a schematic interaction diagram of energy supply re-selection according to an embodiment of the present disclosure;
FIG. 11 is another schematic interaction diagram of energy supply re-selection according to an embodiment of the present disclosure;
FIG. 12 is a schematic interaction diagram of energy supply through multi-node coordination according to an embodiment of the present disclosure;
FIG. 13 is a schematic interaction diagram of joint energy supply performed by a control unit and a data unit according to an embodiment of the present disclosure;
FIG. 14 is a schematic interaction diagram of joint energy supply performed by a control unit and a dedicated node according to an embodiment of the present disclosure;
FIG. 15 is a structural block diagram of a data transmission apparatus according to an embodiment of the present disclosure;
FIG. 16 is a structural block diagram of another data transmission apparatus according to an embodiment of the present disclosure;
FIG. 17 is a structural block diagram of still another data transmission apparatus according to an embodiment of the present disclosure;
FIG. 18 is a structural block diagram of yet another data transmission apparatus according to an embodiment of the present disclosure; and
FIG. 19 is a schematic structural diagram of a communication device according to an embodiment of the present disclosure.

### DETAILED DESCRIPTION

The embodiments of the present disclosure will be described in detail below in conjunction with the accompanying drawings. The present disclosure will be described below in conjunction with the accompanying drawings of embodiments, and the examples given are merely used for illustrating the application and are not intended to limit the scope of the present disclosure.

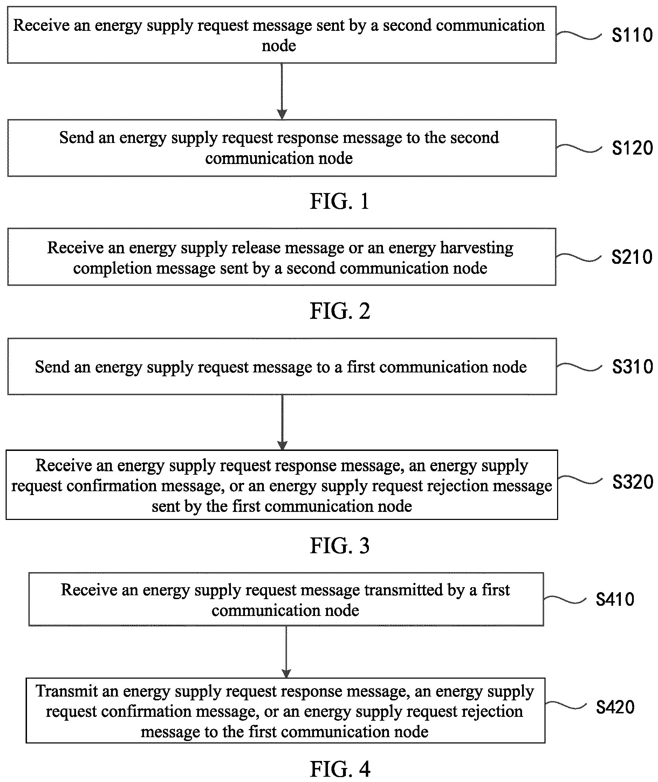

In an embodiment, FIG. 1 is a flowchart of a data transmission method according to an embodiment of the present disclosure. This embodiment may be executed by a first communication node. The first communication node is a node having at least a communication function. For example, the first communication node may include a base station, a relay node, a terminal device, etc. As shown in FIG. 1, this embodiment includes the following steps S110 to S120.

At S 110, an energy supply request message sent by a second communication node is received.

The second communication node is a node that requires energy supply and can convert obtained energy into electrical energy. For example, the second communication node may be a terminal device. For example, the terminal device is a UE, a smartphone, a Customer Premise Equipment (CPE), an Internet of Things (IoT) terminal device, or other devices that require energy supply. The energy supply request message is a message requesting energy supply. In this embodiment, the energy supply request message includes two parts of information, one part being related parameters required by the second communication node for energy harvesting, and the other part being related parameters required by an energy supply node for energy supply. It can be understood that the energy supply request message is used for enabling the energy supply node to configure the energy supply to the second communication node more accurately, and at the same time, the energy supply request message is also used for authentication, authorization, and accounting of the energy supply. The accounting is related to the number of times of energy supply. For example, when the number of times of energy supply by the energy supply node to the second communication node reaches a threshold, an accounting policy is used; and when the number of times of energy supply by the energy supply node to the second communication node reaches another threshold, another accounting policy is used. It should be noted that the energy supply node may be the first communication node or other communication nodes that can supply energy to the second communication node, which is not limited herein. For example, the energy supply node may include a base station, a terminal device, a third-party communication node, a relay node, a dedicated energy supply node, an Intelligent Reflective Surface (IRS) node, etc.

In this embodiment, in a case where the second communication node is located in a cell or region where energy supply can be performed, the second communication node, after accessing the network, may send the energy supply request message to the first communication node. The first communication node directly supplies energy to the second communication node according to the energy supply request message; or controls another communication node to supply energy to the second communication node; or forward the energy supply request message to a third communication node, such that the third communication node controls another communication node to supply energy to the second communication node.

At S120, an energy supply request response message is sent to the second communication node.

The energy supply request response message includes an energy supply-related parameter configured according to the energy supply request message. In this embodiment, the energy supply request response message is used for enabling the second communication node to accurately acquire information such as an energy supply mode and a resource location where energy is located, such that the second communication node can better harvest energy.

In this embodiment, an energy supply request confirmation message is used for indicating that energy supply can be performed for the second communication node through the first communication node or other communication nodes. In this case, energy supply configuration information may not be required, and the second communication node may perform energy harvesting by blind detection, or perform energy harvesting in a predefined manner. An energy supply request rejection message is used for indicating that energy supply cannot be performed for the second communication node. In this embodiment, after the second communication node sends the energy supply request message to the first communication node, the first communication node feeds back the corresponding energy supply request response message to the second communication node according to the energy supply request message, such that the second communication node can more accurately acquire configuration information such as the energy supply mode and the resource location where the energy is located according to the energy supply request response message, and perform energy harvesting more efficiently.

In an embodiment, the data transmission method applied to the first communication node further includes: sending the energy supply request message to a third communication node. The third communication node is a node having at least a control function. For example, the third communication node may be a core network, a dedicated server, an energy supply control node, or other nodes having the control function. In this embodiment, after accessing the network, the second communication node sends the energy supply request message to the first communication node, and the first communication node forwards the energy supply request message to the third communication node, such that the third communication node configures a corresponding energy supply request response message according to the energy supply request message, and sends the energy supply request response message to the second communication node through the first communication node.

In an embodiment, the data transmission method applied to the first communication node further includes: supplying energy to the second communication node according to the energy supply request response message. In this embodiment, in a case where the first communication node has a communication function and an energy supply function, the first communication node, after receiving the energy supply request message, may generate an energy supply request response message or receive an energy supply request response message fed back by the third communication node, and directly send an energy supply signal to the second communication node, i.e., supply energy to the second communication node, according to the energy supply request response message.

In an embodiment, the data transmission method applied to the first communication node further includes: controlling, according to the energy supply request response message, a fourth communication node to supply energy to the second communication node. The fourth communication node is a communication node having at least an energy supply function. For example, the fourth communication node may include a base station, a terminal device, a third-party communication node, a relay node, a dedicated energy supply node, or other nodes having at least the energy supply function. In this embodiment, in a case where the first communication node has a communication function and a control function, the second communication node, after accessing the network, sends the energy supply request message to the first communication node, and the first communication node generates a corresponding energy supply response message and feeds back the same to the second communication node. In addition, the first communication node may also control the fourth communication node to send an energy supply signal to the second communication node, such that the fourth communication node supplies energy to the second communication node.

In an embodiment, before sending an energy supply request response message to the second communication node, the data transmission method applied to the first communication node further includes: receiving the energy supply request response message fed back by a third communication node. In this embodiment, in a case where the first communication node has a communication function and an energy supply function or has a communication function, after the first communication node receives the energy supply request message sent by the second communication node, the first communication node forwards the energy supply request message to the third communication node, for example, through a Non-Access-Stratum (NAS) message, such that the third communication node feeds back an energy supply request response message corresponding to the energy supply request message to the first communication node, and the first communication node forwards the energy supply request response message to the second communication node. For example, the third communication node transmits the energy supply request response message to the second communication node through an NAS. The third communication node sends energy supply-related configuration information to the first communication node or the fourth communication node, and the first communication node or the fourth communication node performs energy supply according to the energy supply-related configuration information. In this way, the second communication node can more accurately acquire configuration information such as the energy supply mode and the resource location where the energy is located according to the energy supply request response message, and perform energy harvesting more efficiently.

In an embodiment, the energy supply request message includes at least one of: an energy supply type; energy supply periodicity information; energy supply frequency-domain information; energy supply start time information; energy supply end time information; energy supply duration information; energy supply intensity information; an energy supply level; energy supply permission; a last energy supply result; a plurality of latest energy supply results; or a beam direction of energy supply. In this embodiment, the energy supply request message sent by the second communication node to the first communication node may be a message including related parameters required for energy supply, or may be an empty message that is only used to represent an energy supply request. In this embodiment, in a case where the energy supply request message is a message including related parameters required for energy supply, the energy supply request message may include at least one of an energy supply type, energy supply periodicity information, energy supply frequency-domain information, energy supply start time information, energy supply end time information, energy supply duration information, energy supply intensity information, an energy supply level, energy supply permission, a last energy supply result, a plurality of latest energy supply results, or a beam direction of energy supply. The energy supply level refers to an energy supply threshold required by the second communication node itself. To be specific, only when the energy supply threshold required by the second communication node is reached, the second communication node can perceive and receive the energy supply signal for energy harvesting. In this embodiment, the energy supply permission and subscription information may be related to a user priority or subscription permission. For example, the user priority is a level of the second communication node. For example, energy supply is preferentially performed for the second communication node with a high user priority. The subscription permission may be the number of times of energy supply performed within a period of time, or may indicate whether energy supply can be performed. The energy supply periodicity information is an interval between two adjacent transmissions of an energy supply signal. For example, an energy supply periodicity of 10 ms means that the energy supply signal is sent to the second communication node every 10 ms. The energy supply duration is a duration required for completing energy supply or a duration of a single time of energy supply. For example, it takes 30 minutes, 1 hour, etc., to complete energy harvesting, or each time of energy supply needs to last for 5 ms, 10 ms, etc., and the energy supply interval may be 40 ms, 80 ms, 100 ms, 160 ms, etc.

In an embodiment, sending an energy supply request response message to the second communication node includes: transmitting an energy supply request confirmation message to the second communication node; or sending an energy supply request rejection message to the second communication node. In this embodiment, the energy supply request confirmation message is a message indicating that energy supply can be performed for the second communication node; and the energy supply request rejection message is a message indicating that energy supply cannot be performed for the second communication node.

In an embodiment, the energy supply request response message further includes at least one of: an energy supply type; a frequency-domain position of an energy supply signal; an energy supply periodicity; energy supply start time; energy supply end time; a duration of an energy supply signal; sequence information of an energy supply signal; a strength of an energy supply signal; a transmit power of an energy supply signal; a beam direction of energy supply; an energy supply key; an energy supply region indication; or a list of energy supply cells. In this embodiment, the frequency-domain position of the energy supply signal is a position where a frequency-domain starting point of the energy supply signal is located; and the energy supply start time and the energy supply end time are respectively positions of a time-domain start point and a time-domain end point of the energy supply signal. In an embodiment, in a case where energy supply is performed for the second communication node by utilizing a dedicated energy supply mode, the frequency-domain position of the energy supply signal may be provided, i.e., energy supply is continuously performed for the second communication node; and in a case where energy supply is performed for the second communication node by utilizing a mode of hybrid transmission of the energy supply signal and a communication signal, not only the frequency-domain position of the energy supply signal is provided, but also the energy supply start time, the energy supply end time, and the energy supply periodicity need to be provided, i.e., energy supply is intermittently performed for the second communication node. The duration of the energy supply signal may be a continuous duration required for sending one energy supply signal or a duration required for completing one time of energy supply. In the case using the dedicated energy supply mode, i.e., in the case where energy supply is continuously performed for the second communication node, the continuous duration required for sending one energy supply signal is the same as the duration required for completing one time of energy supply. In the case using the mode of hybrid transmission of the energy supply signal and the communication signal, i.e., in the case where energy supply is performed intermittently for the second communication node, the continuous duration required for sending one energy supply signal is shorter than the duration required for completing one time of energy supply.

In this embodiment, the energy supply region indication indicates a region bound to the second communication node for energy supply, and may be expressed in the form of a cell list. It can be understood that the energy supply region indication is for an energy supply control node. For example, in an actual communication process, the second communication node may move from one cell to another cell, and the energy supply control node may control a plurality of energy supply cells or energy supply nodes, such that the second communication node can find a node that can perform energy supply in the energy supply region. In this way, continuous energy supply for the second communication node can be ensured during the movement of the second communication node, and the second communication node does not need to re-send the energy supply request message after being handed over to another cell. In this embodiment, the energy supply key is used for encrypting the energy supply signal, or the energy supply key is used for encrypting energy supply configuration information, to prevent the energy supply signal from being stolen and used. In this embodiment, the sequence information of the energy supply signal is sequence information configured for generating the energy supply signal and may include a sequence in frequency domain and/or a sequence in time domain.

In this embodiment, the strength of the energy supply signal may be quantized level information. For example, the strength of the energy supply signal may be strength level 1, strength level 2, etc.

In this embodiment, the energy supply request response message may include at least one of: an energy supply type, a frequency-domain position of an energy supply signal, an energy supply periodicity, energy supply start time, energy supply end time, a duration of an energy supply signal, sequence information of an energy supply signal, a strength of an energy supply signal, a transmit power of an energy supply signal, a beam direction of energy supply, an energy supply key, an energy supply region indication, or a list of energy supply cells. In a case where the energy supply request response message includes the list of energy supply cells, corresponding energy supply information may be configured for each cell in the cell list. For example, the energy supply information includes at least one of the energy supply type, the frequency-domain position of the energy supply signal, the energy supply periodicity, the energy supply start time, the energy supply end time, the duration of the energy supply signal, the sequence information of the energy supply signal, the strength of the energy supply signal, the transmit power of the energy supply signal, or the beam direction of energy supply. In this embodiment, different energy supply information may be configured for different cells. For example, a plurality of first communication nodes configure corresponding energy supply information according to their respective current network statuses.

In an embodiment, the energy supply request message further includes: terminal device identity information. In this embodiment, the terminal device identity information is used for representing a unique identification of an identity of the second communication node. For example, the terminal device identity information may include a terminal device identifier (ID), a product code, an energy supply identification code, and the like.

In an embodiment, a configuration mode of the energy supply key includes one of the following that: an energy supply cell corresponds one-to-one to an energy supply key; one energy supply key corresponds to a plurality of cells; an energy supply region corresponds one-to-one to an energy supply key; or the second communication node corresponds one-to-one to an energy supply key. In this embodiment, one energy supply cell may correspond to one energy supply key, or a plurality of energy supply cells may correspond to one energy supply key, or one energy supply region may correspond to one energy supply key, or one second communication node may correspond to one energy supply key.

In an embodiment, the energy supply type in the energy supply request message or the energy supply request response message includes at least one of an energy supply bandwidth; an energy supply frequency; an energy supply intensity; an energy supply spectrum; or an energy supply mode. The energy supply bandwidth is a bandwidth required by the energy supply signal, for example, a wideband mode or a narrowband mode. The energy supply mode may include the dedicated energy supply mode or the mode of hybrid transmission of an energy supply signal and a communication signal (for example, one signal is used for communication, the other is used for energy supply, and the two signals are multiplexed on the same resource and transmitted together; or one signal is used for both communication and energy supply). The energy supply strength is used for indicating that the required strength of the energy supply signal varies with different second communication nodes. In this embodiment, the energy supply intensity is related to an energy supply sensitivity requirement of the second communication node. For example, the energy supply intensity may be 32 db or 36 db. The energy supply spectrum is a frequency band for transmitting the energy supply signal. The energy supply frequency is a frequency for transmitting the energy supply signal, e.g., 700 MHz, 2 GHz, etc. In this embodiment, the second communication node receives, on the supported frequency band or frequency, the energy supply signal sent by the energy supply node to perform energy harvesting.

For example, in a case where a base station serves as an energy supply node, a core network or a dedicated server may serve as an energy supply control node. In a case where a dedicated energy supply node, a UE, a relay node, or a third-party node serves as an energy supply node, a base station may serve as an energy supply control node, In a case where a dedicated energy supply node, a UE, a relay node, or a third-party node serves as an energy supply node, a base station may perform transparent transmission with a core network, and the core network serves as an energy supply control node. A process of the transparent transmission is transparently transmitting the energy supply request message to the core network through a message invisible to the base station (NAS message).

In an embodiment, the first communication node includes a control unit and a data unit; and a process of supplying energy to the second communication node includes: receiving, by the control unit, the energy supply request message sent by the second communication node; sending, by the control unit, the energy supply request response message to the data unit; and supplying, by the data unit, energy to the second communication node. In this embodiment, in a scenario where the control unit and the data unit are separated, the energy supply request message or the energy supply request response message is transmitted between an interface of the control unit and an interface of the data unit, and the control unit sends an energy supply request response message corresponding to the energy supply request message to the data unit, such that the data unit transmits an energy supply signal to the second communication node according to the energy supply request response message, to perform energy supply for the second communication node.

In an embodiment, the data transmission method applied to the first communication node further includes: receiving an energy supply release message or an energy harvesting completion message sent by a second communication node. In this embodiment, in a case where the second communication node has completed the energy harvesting and the second communication node is still located in an energy supply region or energy supply cell corresponding to the first communication node, the second communication node sends an energy supply release message or an energy harvesting completion message to the first communication node, such that the second communication node disconnects from the energy supply node and stops the energy harvesting.

In an embodiment, the data transmission method applied to the first communication node further includes: sending the energy supply release message or the energy harvesting completion message to a third communication node; and receiving an energy supply release response message or an energy harvesting completion response message fed back by the third communication node. In this embodiment, in a case where the first communication node has a communication function and an energy supply function or has a communication function, the second communication node has completed the energy harvesting, and the second communication node is still located in an energy supply region or energy supply cell corresponding to the first communication node, the first communication node sends an energy supply release message or an energy harvesting completion message to the third communication node, such that the third communication node feeds back a corresponding energy supply release response message or energy harvesting completion response message to the first communication node, and the first communication node forwards the energy supply release response message or energy harvesting completion response message to the second communication node, such that the second communication node disconnects from the energy supply node and stops the energy harvesting.

In an embodiment, the data transmission method applied to the first communication node further includes: sending the energy supply release response message or the energy harvesting completion response message to the second communication node. In this embodiment, in a case where the first communication node has a communication function and a control function or has at least a communication function, the second communication node has completed the energy harvesting, and the second communication node is still located in an energy supply region or energy supply cell corresponding to the first communication node, the first communication node feeds back the energy supply release response message or the energy harvesting completion response message received or generated by itself to the second communication node, such that the second communication node disconnects from the energy supply node and stops the energy harvesting.

In an embodiment, the data transmission method applied to the first communication node further includes: stopping, according to the energy supply release response message or the energy harvesting completion response message, supplying energy to the second communication node. In this embodiment, in a case where the first communication node has a communication function and an energy supply function, the second communication node has completed the energy harvesting, and the second communication node is still located in an energy supply region or energy supply cell corresponding to the first communication node, the first communication node feeds back the energy supply release response message or the energy harvesting completion response message generated by itself to the second communication node, and stops, according to the energy supply release response message or the energy harvesting completion response message, supplying energy to the second communication node.

In an embodiment, the data transmission method applied to the first communication node further includes: controlling, according to the energy supply release response message or the energy harvesting completion response message, a fourth communication node to stop supplying energy to the second communication node. In this embodiment, in a case where the first communication node has a communication function and a control function, the second communication node has completed the energy harvesting, and the second communication node is still located in an energy supply region or energy supply cell corresponding to the first communication node, the first communication node feeds back the energy supply release response message or the energy harvesting completion response message generated by itself to the second communication node, and controls the fourth communication node to stop supplying energy to the second communication node.

In an embodiment, each of the energy supply release message and the energy harvesting completion message includes at least one of energy harvesting status information; terminal device energy status information; or energy charging duration information. In this embodiment, each of the energy supply release message and the energy harvesting completion message may be an empty message, or may include at least one of the energy harvesting status information, the terminal device energy status information, or the energy charging duration information. The energy harvesting status information indicates a state of the energy harvesting process performed by the second communication node (e.g., efficiency of energy harvesting in each period, or efficiency of energy harvesting from each node, or efficiency of energy harvesting from each node in each period) or a state after the energy harvesting is completed. The energy harvesting completion information is used for indicating a degree of completion of the energy harvesting by the second communication node or historical energy harvesting efficiency information of the second communication node. The terminal device energy status information indicates a state of energy currently achieved by the terminal device. The energy charging duration information indicates a total duration of energy harvesting. In this embodiment, the function of the energy supply completion message is to enable the network side to stop the energy supply in a timely manner, to reduce useless consumption of energy by the network side; and the function of the energy harvesting status information is to enable the network side to supply energy more efficiently and adjust the energy supply mode in a timely manner, such that the second communication node can perform energy harvesting more efficiently.

In an embodiment, the energy harvesting status information includes at least one of: energy harvesting status information in time domain; energy harvesting status information of each node; energy harvesting status information of each cell; or energy harvesting efficiency information. In this embodiment, the energy harvesting status information in time domain may be status information of energy harvesting that has been completed or has not been completed in time domain. The energy harvesting status information of each node may be status information of energy harvesting performed by the same second communication node from a plurality of energy supply nodes. The energy harvesting status information of each cell may be status information of energy harvesting performed by the same second communication node from a plurality of energy supply cells. The energy harvesting efficiency information is used for indicating effectiveness of the energy harvesting performed by the second communication node. Higher energy harvesting efficiency indicates higher effectiveness.

In an embodiment, the energy supply release response message includes: an energy supply release confirmation message; or the energy harvesting completion response message includes: an energy harvesting completion confirmation message. In this embodiment, the energy supply release confirmation message is a message indicating that energy supply for the second communication node can be stopped; and the energy harvesting completion confirmation message is used for indicating that the second communication node has completed energy harvesting, i.e., the terminal device energy status information of the second communication node has reached 100%.

In an embodiment, each of the energy supply release message and the energy harvesting completion message further includes at least one of: terminal device identity information; released energy supply region information; or released energy supply cell information. In this embodiment, for the terminal device identity information, reference may be made to the description in the above embodiments, and the details will not be repeated herein. The released energy supply region information is information related to a region that stops supplying energy to the second communication node (e.g., a region identifier, a region location, etc.). The released energy supply cell information is information related to a cell that stops supplying energy to the second communication node (e.g., a cell identifier, a cell location, a base station to which the cell belongs, etc.).

In an embodiment, the data transmission method applied to the first communication node further includes: receiving, from the second communication node, an energy supply re-selection message, or an energy supply release message and an energy supply re-request message, or an energy supply re-request message. In this embodiment, in a case where the second communication node is in a mobile state, the second communication node, after leaving a coverage range of an energy supply node, an energy supply region, or an energy supply cell, may have not completed energy harvesting and need to continue energy harvesting. In this case, when the second communication node is located in a region or cell where energy supply can be provided, the second communication node may access a network of the region or cell, and send an energy supply re-selection message, or an energy supply release message and an energy supply re-request message, or an energy supply re-request message to the first communication node. The energy supply re-selection message is a message for directly re-selecting an energy supply cell or an energy supply region. The energy supply re-request message is an energy supply request message re-initiated after the second communication node has completed energy supply release. If the second communication node has not completed the energy supply release, the second communication node needs to send the energy supply release message and the energy supply re-request message to the first communication node, i.e., the energy supply release is performed before the energy supply cell or the energy supply region is re-selected.

In an embodiment, the data transmission method applied to the first communication node further includes: sending the energy supply re-selection message, or the energy supply release message and the energy supply re-request message, or the energy supply re-request message to a third communication node; and receiving, from the third communication node, an energy supply re-selection response message, or an energy supply release response message and an energy supply re-request response message, or an energy supply re-request response message. In this embodiment, in a case where the first communication node has a communication function or has a communication function and an energy supply function, the first communication node sends an energy supply re-selection message, or an energy supply release message and an energy supply re-request message, or an energy supply re-request message to the third communication node, such that the third communication node generates an energy supply re-selection response message corresponding to the energy supply re-selection message, or generates an energy supply release response message corresponding to the energy supply release message and an energy supply re-request response message corresponding to the energy supply re-request message, or generates an energy supply re-request response message corresponding to the energy supply re-request message.

In an embodiment, the data transmission method applied to the first communication node further includes: stopping supplying energy to the second communication node, or stopping supplying energy to the second communication node and controlling another first communication node to supply energy to the second communication node, or controlling a fourth communication node to stop supplying energy to the second communication node, according to the energy supply re-selection response message, or the energy supply release response message and the energy supply re-request response message, or the energy supply re-request response message. In this embodiment, in a case where the first communication node has a communication function and an energy supply function, the first communication node directly stops supplying energy to the second communication node, according to the energy supply re-selection response message, or the energy supply release response message and the energy supply re-request response message, or the energy supply re-request response message. In a case where the first communication node is in a mobile state, i.e., is handed over to another region or cell and has an energy supply function and a communication function, the first communication node stops supplying energy to the second communication node and controls another first communication node to supply energy to the second communication node, according to the energy supply re-selection response message, or the energy supply release response message and the energy supply re-request response message, or the energy supply re-request response message. In a case where the first communication node has a communication function and a control function, the first communication node controls the fourth communication node to stop supplying energy to the second communication node, according to the energy supply re-selection response message, or the energy supply release response message and the energy supply re-request response message, or the energy supply re-request response message.

In an embodiment, the data transmission method applied to the first communication node further includes: feeding back an energy supply re-selection response message, or an energy supply release response message and an energy supply re-request response message, or an energy supply re-request response message to the second communication node. In this embodiment, in a case where the first communication node has a communication function or has a communication function and a control function, the first communication node sends an energy supply re-selection response message received or generated by itself, or an energy supply release response message and an energy supply re-request response message that are received or generated by itself, or an energy supply re-request response message received or generated by itself, to the second communication node.

In an embodiment, the energy supply re-selection message includes at least one of one or more latest energy supply results; a region or cell providing a latest energy supply; an energy supply type; energy supply periodicity information; energy supply frequency-domain information; energy supply start time information; energy supply end time information; energy supply duration information; energy supply intensity information; an energy supply level; or energy supply permission. In this embodiment, for explanations of the parameters in the energy supply re-selection message, reference may be made to the description of the corresponding parameters in the above embodiments, and the details will not be repeated herein.

In an embodiment, the energy supply re-selection response message includes at least one of: an energy supply type; a frequency-domain position of an energy supply signal; an energy supply periodicity; energy supply start time; energy supply end time; a duration of an energy supply signal; sequence information of an energy supply signal; energy supply intensity information; transmit power information of an energy supply signal; a beam direction of energy supply; an energy supply key; an energy supply region indication; or a list of energy supply cells. In this embodiment, for explanations of the parameters in the energy supply re-selection response message, reference may be made to the description of the corresponding parameters in the above embodiments, and the details will not be repeated herein.

In an embodiment, FIG. 2 is a flowchart of another data transmission method according to an embodiment of the present disclosure. This embodiment is applied to a case where a second communication node is in a mobile state. It can be understood that when the second communication node moves from one region to another region, a response is made to an energy supply request message from the second communication node, and the node performing energy supply also changes. This embodiment may be executed by a fifth communication node. The fifth communication node is a node having at least a communication function. For example, the fifth communication node may include a base station, a relay node, a terminal device, etc. It can be understood that the fifth communication node and the above first communication node are identical devices belonging to different regions. As shown in FIG. 2, this embodiment includes a following step S210. In other words, a node receiving an energy supply request message sent by a second communication node, a node receiving an energy supply release message or an energy supply completion message sent by the second communication node, and a node receiving an energy supply re-request message or an energy supply re-selection message sent by the second communication node may be the same node or different nodes, i.e., the three nodes may actually be one node, two nodes, or three nodes.

At S210, an energy supply release message or an energy harvesting completion message sent by a second communication node is received.

In this embodiment, in a case where the second communication node is in a mobile state, the second communication node may always be in the mobile state during a process of energy harvesting, i.e., the second communication node moves from one energy supply region or energy supply cell (e.g., a first communication node) to another energy supply region or energy supply cell (e.g., the fifth communication node), and completes the energy harvesting in the another energy supply region or energy supply cell. In this case, the second communication node may send an energy supply release message or an energy harvesting completion message. Because the node corresponding to the energy supply region or energy supply cell where the second communication node completes the energy harvesting is the fifth communication node, and the node corresponding to the energy supply region or energy supply cell that initially receives the energy supply request message sent by the second communication node is the first communication node, the second communication node may send an energy supply release message or an energy harvesting completion message to the fifth communication node, such that the node supplying energy to the second communication node stops energy supply.

In an embodiment, the data transmission method applied to the fifth communication node further includes: sending the energy supply release message or the energy harvesting completion message to a third communication node; and receiving an energy supply release response message or an energy harvesting completion response message fed back by the third communication node. In this embodiment, in a case where the fifth communication node has a communication function and an energy supply function or has a communication function, and the second communication node has completed the energy harvesting in an energy supply region or energy supply cell corresponding to the fifth communication node, the fifth communication node sends an energy supply release message or an energy harvesting completion message to the third communication node, such that the third communication node feeds back a corresponding energy supply release response message or energy harvesting completion response message to the fifth communication node, and the fifth communication node forwards the energy supply release response message or energy harvesting completion response message to the second communication node, such that the second communication node disconnects from the energy supply node and stops the energy harvesting.

In an embodiment, the data transmission method applied to the fifth communication node further includes: transmitting the energy supply release response message or the energy harvesting completion response message to the second communication node. In this embodiment, in a case where the fifth communication node has a communication function and a control function or has at least a communication function, and the second communication node has completed the energy harvesting in an energy supply region or energy supply cell corresponding to the fifth communication node, the fifth communication node feeds back the energy supply release response message or the energy harvesting completion response message received or generated by itself to the second communication node, such that the second communication node disconnects from the energy supply node and stops the energy harvesting.

In an embodiment, the data transmission method applied to the fifth communication node further includes: stopping, according to the energy supply release response message or the energy harvesting completion response message, supplying energy to the second communication node. In this embodiment, in a case where the fifth communication node has a communication function and an energy supply function, and the second communication node has completed the energy harvesting in an energy supply region or energy supply cell corresponding to the fifth communication node, the fifth communication node feeds back the energy supply release response message or the energy harvesting completion response message generated by itself to the second communication node, and stops, according to the energy supply release response message or the energy harvesting completion response message, supplying energy to the second communication node.

In an embodiment, the data transmission method applied to the fifth communication node further includes: controlling, according to the energy supply release response message or the energy harvesting completion response message, a fourth communication node to stop supplying energy to the second communication node. In this embodiment, in a case where the fifth communication node has a communication function and a control function and the second communication node has completed the energy harvesting in an energy supply region or energy supply cell corresponding to the fifth communication node, the fifth communication node feeds back the energy supply release response message or the energy harvesting completion response message generated by itself to the second communication node, and controls the fourth communication node to stop supplying energy to the second communication node.

In an embodiment, each of the energy supply release message and the energy harvesting completion message includes at least one of: energy harvesting status information; terminal device energy status information; or energy charging duration information.

In an embodiment, the energy harvesting status information includes at least one of: energy harvesting status information in time domain; energy harvesting status information of each node; energy harvesting status information of each cell; or energy harvesting efficiency information.

In an embodiment, the energy supply release response message includes: an energy supply release confirmation message; or the energy harvesting completion response message includes: an energy harvesting completion confirmation message.

In an embodiment, each of the energy supply release message and the energy harvesting completion message further includes at least one of: terminal device identity information; released energy supply region information; or released energy supply cell information.

In an embodiment, the data transmission method applied to the fifth communication node further includes: receiving, from the second communication node, an energy supply re-selection message, or an energy supply release message and an energy supply re-request message, or an energy supply re-request message.

In an embodiment, the data transmission method applied to the fifth communication node further includes: sending the energy supply re-selection message, or the energy supply release message and the energy supply re-request message, or the energy supply re-request message to a third communication node; and receiving, from the third communication node, an energy supply re-selection response message, or an energy supply release response message and an energy supply re-request response message, or an energy supply re-request response message.

In an embodiment, the data transmission method applied to the fifth communication node further includes: stopping supplying energy to the second communication node, or stopping supplying energy to the second communication node and controlling another first communication node to supply energy to the second communication node, or controlling a fourth communication node to stop supplying energy to the second communication node, according to the energy supply re-selection response message, or the energy supply release response message and the energy supply re-request response message, or the energy supply re-request response message.

In an embodiment, the data transmission method applied to the fifth communication node further includes: feeding back an energy supply re-selection response message, or an energy supply release response message and an energy supply re-request response message, or an energy supply re-request response message to the second communication node.

In an embodiment, the energy supply re-selection message includes at least one of one or more latest energy supply results; a region or cell providing a latest energy supply; an energy supply type; energy supply periodicity information; energy supply frequency-domain information; energy supply start time information; energy supply end time information; energy supply duration information; energy supply intensity information; an energy supply level; or energy supply permission.

In an embodiment, the energy supply re-selection response message includes at least one of: an energy supply type; a frequency-domain position of an energy supply signal; an energy supply periodicity; energy supply start time; energy supply end time; a duration of an energy supply signal; sequence information of an energy supply signal; energy supply intensity information; transmit power information of an energy supply signal; a beam direction of energy supply; an energy supply key; an energy supply region indication; or a list of energy supply cells.

It should be noted that for the transmission processes and explanatory explanations of the energy supply release message, the energy harvesting completion message, the energy supply release response message, the energy harvesting completion response message, the energy supply re-selection message, the energy supply re-selection response message, the energy supply re-request message, and the energy supply re-request response message in the embodiment of the data transmission method applied to the fifth communication node, reference may be made to the corresponding descriptions in the embodiment of the data transmission method applied to the first communication node, and the details will not be repeated herein.

In an embodiment, the data transmission method applied to the fifth communication node further includes:
sending the energy supply request message to another first communication node, such that a first communication node and the another first communication node jointly supply energy to the second communication node. Alternatively, a third node coordinates a plurality of first communication nodes to jointly supply energy to the second communication node (the third node may transmit the energy supply request message or an energy supply configuration message to other first communication node).

In this embodiment, in a case where the first communication node has an energy supply function and a communication function, a plurality of first communication nodes may adaptively coordinate to jointly supply energy. In other words, a plurality of first communication nodes may send energy supply signals to the second communication node, to supply energy to the second communication node.

In an embodiment, FIG. 3 is a flowchart of still another data transmission method according to an embodiment of the present disclosure. This embodiment may be executed by a second communication node. The second communication node refers to a terminal device side. For example, the second communication node may be a device such as a UE, an iPad, an IoT terminal device, a CPE, or the like. As shown in FIG. 3, this embodiment includes the following steps S310-S320.

At S310, an energy supply request message is sent to a first communication node.

At S320, an energy supply request response message, an energy supply request confirmation message, or an energy supply request rejection message sent by the first communication node is received.

In this embodiment, after accessing the network, the second communication node may send an energy supply request message to the first communication node, and receive an energy supply request response message fed back by the first communication node, so as to receive an energy supply signal according to the energy supply request response message and perform energy harvesting.

In an embodiment, the data transmission method applied to the second communication node further includes: performing energy harvesting according to the energy supply request response message.

In an embodiment, the data transmission method applied to the second communication node further includes: performing energy harvesting according to the energy supply request confirmation message.

In an embodiment, the data transmission method applied to the second communication node further includes: abandoning energy harvesting from the first communication node according to the energy supply request rejection message.

In an embodiment, the data transmission method applied to the second communication node further includes: sending an energy supply release message or an energy harvesting completion message to the first communication node; or sending an energy supply release message or an energy harvesting completion message to a fifth communication node. In this embodiment, when the second communication node has completed the energy harvesting and the second communication node is still located in an energy supply region or energy supply cell corresponding to the first communication node, the second communication node sends an energy supply release message or an energy harvesting completion message to the first communication node. When the second communication node has completed the energy harvesting and moves to an energy supply region or energy supply cell corresponding to the fifth communication node, the second communication node sends an energy supply release message or an energy harvesting completion message to the fifth communication node.

In an embodiment, the second communication node leaves a coverage range of an energy supply node, an energy supply region, or an energy supply cell; and the data transmission method applied to the second communication node further includes:
sending an energy supply re-selection message, or an energy supply release message and an energy supply re-request message to the first communication node; or
sending an energy supply re-selection message, or an energy supply release message and an energy supply re-request message to the fifth communication node.

In an embodiment, a resource for transmitting data overlaps a resource where an energy supply signal is located; and one of the following processing modes is used: a rate matching mode; an abandonment mode; or a serial interference cancellation mode. In this embodiment, in a case where the resource used by the second communication node for transmitting the data overlaps the resource where the energy supply signal is located, the second communication node may skip the resource where the energy supply signal is located to perform rate matching using the rate matching mode, or use the abandonment mode to avoid the impact of the energy supply signal on the data transmission, or use the serial interference cancellation mode to reduce the impact of the energy supply signal on the data transmission.

In an embodiment, Radio Resource Management (RRM) measurement, Synchronization Signal and Physical Broadcast Channel (PBCH) Block (SSB) selection, beam selection, beam management, cell selection, or cell handover is performed according to an energy supply signal.

It should be noted that for explanations of the parameters in the embodiment of the data transmission method applied to the second communication node, reference may be made to the description of the corresponding parameters in the above embodiments, and the details will not be repeated herein.

In an embodiment, FIG. 4 is a flowchart of yet another data transmission method according to an embodiment of the present disclosure. This embodiment may be executed by a third communication node. For example, the third communication node may include a core network, a dedicated server, or other nodes having an energy supply control function. As shown in FIG. 4, this embodiment includes the following steps S410-S420.

At S410, an energy supply request message transmitted by a first communication node is received.

At S420, an energy supply request response message, an energy supply request confirmation message, or an energy supply request rejection message is transmitted to the first communication node.

In an embodiment, the data transmission method applied to the third communication node further includes: receiving an energy supply release message or an energy harvesting completion message sent by the first communication node; and feeding back an energy supply release response message or an energy harvesting completion response message to the first communication node.

In an embodiment, the data transmission method applied to the third communication node further includes: receiving an energy supply release message or an energy harvesting completion message sent by a fifth communication node; and feeding back an energy supply release response message or an energy harvesting completion response message to the fifth communication node.

In an embodiment, the data transmission method applied to the third communication node further includes: receiving, from the first communication node, an energy supply re-selection message, or an energy supply release message and an energy supply re-request message, or an energy supply re-request message; and
transmitting an energy supply re-selection response message, or an energy supply release response message and an energy supply re-request response message, or an energy supply re-request response message to the first communication node.

In an embodiment, the data transmission method applied to the third communication node further includes: receiving, from a fifth communication node, an energy supply re-selection message, or an energy supply release message and an energy supply re-request message, or an energy supply re-request message; and
transmitting an energy supply re-selection response message, or an energy supply release response message and an energy supply re-request response message, or an energy supply re-request response message to the fifth communication node.

In an embodiment, the data transmission method applied to the third communication node further includes: controlling, by the third communication node, a fourth communication node to supply energy to a second communication node; or
controlling, by the third communication node, a fourth communication node to stop supplying energy to a second communication node, and controlling another fourth communication node to supply energy to the second communication node.

In an embodiment, the data transmission method applied to the third communication node further includes: transmitting the energy supply request message or an energy supply configuration message to another first communication node.

The energy supply configuration message includes at least one of: an energy supply type, a frequency-domain position of an energy supply signal, an energy supply periodicity, energy supply start time, energy supply end time, a duration of an energy supply signal, sequence information of an energy supply signal, energy supply intensity information, transmit power information of an energy supply signal, a beam direction, or an energy supply key.

It should be noted that for explanations of the parameters in the embodiment of the data transmission method applied to the third communication node, reference may be made to the description of the corresponding parameters in the above embodiments, and the details will not be repeated herein.

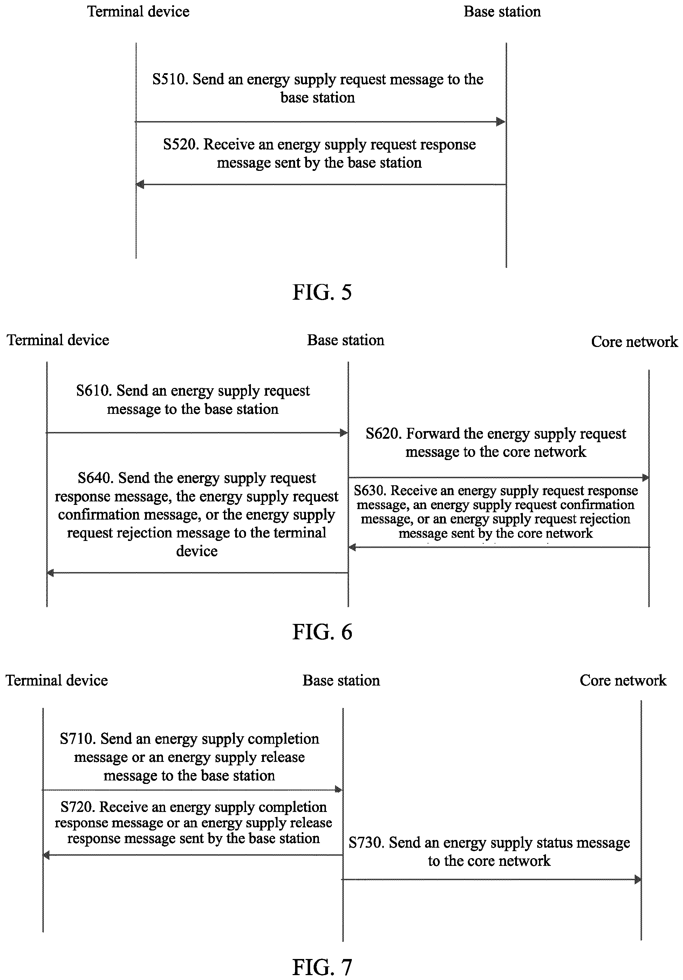

In an embodiment, a process of requesting energy supply is described using an example where the first communication node is a base station and the second communication node is a terminal device. FIG. 5 is a schematic interaction diagram of an energy supply request according to an embodiment of the present disclosure. As shown in FIG. 5, this embodiment includes the following steps S510-S520.

At S510, an energy supply request message is sent to the base station.

At S520, an energy supply request response message sent by the base station is received.

In this embodiment, a network side indicates in a system message whether the network can provide an energy supply and/or indicates a type of energy supply.

In this embodiment, the terminal device initiates an energy supply request message to the network side after accessing the network, and the network side sends an energy supply request response message to the terminal device.

The energy supply request message includes at least one of an energy supply type, energy supply periodicity information, energy supply frequency-domain information, energy supply start time information, energy supply end time information, energy supply duration information, energy supply intensity information, an terminal device energy supply level, terminal device energy supply permission, a last energy supply result, a plurality of latest energy supply results, or a beam direction of energy supply. In this embodiment, the energy supply request message may alternatively be an empty message that is only used to represent an energy supply request.

The energy supply request message is used for enabling the base station to configure the energy supply more accurately, and at the same time, is also used for authentication, authorization, and accounting of the energy supply.

In this embodiment, the energy supply request response message includes at least one of an energy supply type, a frequency-domain position of an energy supply signal, an energy supply periodicity, energy supply start time, energy supply end time, a duration of an energy supply signal, sequence information of an energy supply signal, energy supply intensity information, transmit power information of an energy supply signal, a beam direction, an energy supply key, an energy supply region indication, or a list of energy supply cells. The energy supply intensity information may be quantized level information.

In this embodiment, after the network side receives the energy supply request message, the network side may feed back an energy supply request confirmation message or an energy supply request rejection message.

In this embodiment, the energy supply request response message is used for enabling the terminal device to accurately acquire an energy supply mode and a resource location and perform energy harvesting.

In an embodiment, a process of requesting energy supply is described using an example where the first communication node is a base station, the second communication node is a terminal device, and the third communication node is a core network. FIG. 6 is another schematic interaction diagram of an energy supply request according to an embodiment of the present disclosure. As shown in FIG. 6, this embodiment includes the following steps S610-S640.

At S610, an energy supply request message is sent to the base station.

At S620, the energy supply request message is forwarded to the core network.

At S630, an energy supply request response message, an energy supply request confirmation message, or an energy supply request rejection message sent by the core network is received.

At S640, the energy supply request response message, the energy supply request confirmation message, or the energy supply request rejection message is sent to the terminal device.

In this embodiment, the base station sends the energy supply request message to the core network, where the energy supply request message includes at least one of a terminal device identity, an energy supply type, energy supply duration information, or an energy supply intensity; and the core network determines according to the terminal device identity information whether energy supply can be performed for the terminal device and performs authorization, or may determine, according to a level or type of the terminal device, a level or category of energy supply that can be performed for the terminal device. The core network sends an energy supply request response message or an energy supply request message or an energy supply request rejection message to the base station. The base station sends the energy supply request response message or the energy supply request confirmation message or the energy supply request rejection message to the terminal device according to the energy supply request response message or the energy supply request confirmation message or the energy supply request rejection message fed back by the core network, and sends an energy supply signal to the terminal device according to the energy supply request response message.

In this embodiment, the energy supply request response message includes at least one of an energy supply type, energy supply duration information, an energy supply intensity, an energy supply key, an energy supply region indication, or a list of energy supply cells.

In a case where the energy supply request response message includes the list of energy supply cells, corresponding energy supply information may be configured for each cell in the cell list. For example, the energy supply information includes one or more of an energy supply type, a frequency-domain position of an energy supply signal, an energy supply periodicity, energy supply start time, energy supply end time, a duration of an energy supply signal, sequence information of an energy supply signal, energy supply intensity information, transmit power information of an energy supply signal, or a beam direction.

One cell may correspond to one energy supply key, or a plurality of cells may correspond to one energy supply key, or one energy supply region may correspond to one energy supply key, or one UE may correspond to one energy supply key.

The energy supply type includes at least one of: an energy supply bandwidth, an energy supply frequency, an energy supply intensity, an energy supply spectrum, or an energy supply mode.

The core network may define a dedicated energy supply management node, including functions such as authorization, key distribution, or inter-node coordination.

In an embodiment, a process of energy supply release or completion is described using an example where the first communication node is a base station and the second communication node is a terminal device. FIG. 7 is a schematic interaction diagram of energy supply release according to an embodiment of the present disclosure. As shown in FIG. 7, this embodiment includes the following steps of S710-S730.

At S710, an energy supply completion message or an energy supply release message is sent to the base station.

At S720, an energy supply completion response message or an energy supply release response message sent by the base station is received.

At S730, an energy supply status message is sent to the core network.

In this embodiment, after completing energy harvesting, the terminal device accesses the network and sends an energy supply release message or an energy harvesting completion message to the network; and the network sends an energy supply release response message or an energy harvesting completion response message to the terminal device.

The energy supply release message (energy harvesting completion message) may be an empty message, or may include at least one of energy harvesting status information, energy harvesting completion information, terminal device energy status information, or energy charging duration information.

The energy harvesting status information includes at least one of energy harvesting status information in time domain, energy harvesting status information of each node, energy harvesting status information of each cell, or energy harvesting efficiency information.

The terminal device energy status information includes a terminal device energy charging state, for example, 100%, 80%, 60%, 50%, etc.

The energy supply release response message or the energy harvesting completion response message includes an confirmation message for the energy supply release message (energy harvesting completion message) received by the network side.

In this embodiment, the base station sends an energy harvesting status message to the core network. The energy harvesting status message includes energy harvesting status information and/or energy charging duration information reported by the terminal device. The main function of the energy supply completion message is to enable the network to stop the energy supply in a timely manner, to reduce useless consumption of energy by the network. The main function of the energy harvesting status message is to enable the network to supply energy more efficiently and adjust the energy supply mode in a timely manner, such that the terminal device can perform energy harvesting more efficiently.

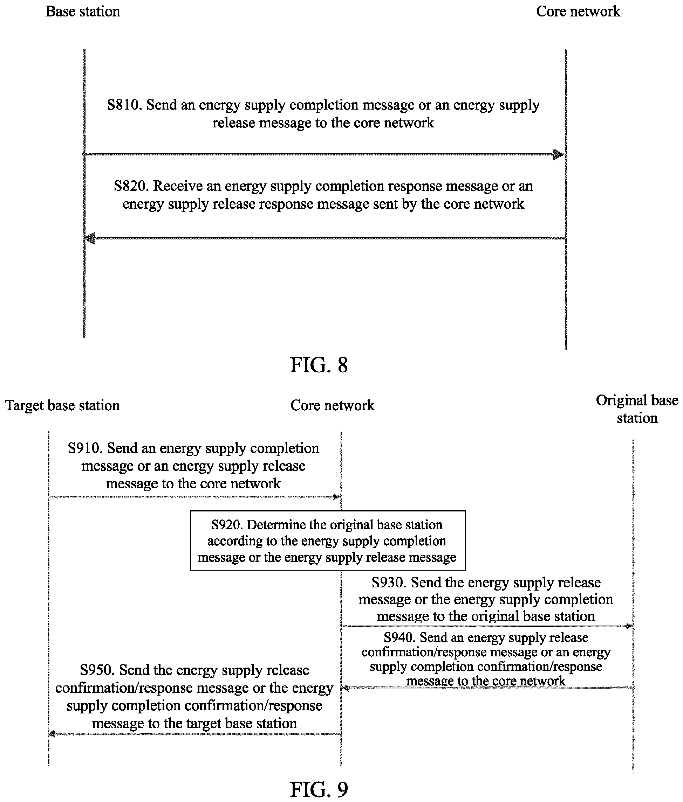

In an embodiment, a process of energy supply release or completion is described using an example where the first communication node is a base station, the second communication node is a terminal device, and the third communication node is a core network. FIG. 8 is another schematic interaction diagram of energy supply release according to an embodiment of the present disclosure. As shown in FIG. 8, this embodiment includes the following steps S810-S820.

At S810, an energy supply completion message or an energy supply release message is sent to the core network.

At S820, an energy supply completion response message or an energy supply release response message sent by the core network is received.

In this embodiment, the base station sends an energy supply completion message or an energy supply release message to the core network. The energy supply completion message or the energy supply release message includes at least one of terminal device identity information, released energy supply region information, or released energy supply cell information.

In an embodiment, a process of energy supply release or completion is described using an example where the first communication node is a base station, the second communication node is a terminal device, and the third communication node is a core network. In this embodiment, the terminal device is in a mobile state during the energy supply process, i.e., the terminal device sends an energy supply request message to an original base station and sends an energy supply release message to a target base station. FIG. 9 is still another schematic interaction diagram of energy supply release according to an embodiment of the present disclosure. As shown in FIG. 9, this embodiment includes the following steps S910-S950.

At S910, an energy supply completion message or an energy supply release message is sent to the core network.

At S920, the original base station is determined according to the energy supply completion message or the energy supply release message.

At S930, the energy supply release message or the energy supply completion message is sent to the original base station.

At S940, an energy supply release confirmation/response message or an energy supply completion confirmation/response message is sent to the core network.

At S950, the energy supply release confirmation/response message or the energy supply completion confirmation/response message is sent to the target base station.

In this embodiment, after receiving an energy supply completion message or an energy supply release message sent by the target base station, the core network sends the energy supply release message or the energy supply completion message to the original base station.

If the energy supply completion message or the energy supply release message includes released energy supply region information or released energy supply cell information, the core network can determine the original base station according to the released energy supply region information or the released energy supply cell information. Alternatively, the core network may determine the original base station according to a cached mapping relationship between terminal device identity information and corresponding energy supply cells or regions.

In this embodiment, after receiving an energy supply completion response message or an energy supply release response message, or an energy supply request confirmation message or an energy supply release confirmation message sent by the original base station, the core network sends the energy supply completion response message or the energy supply release response message, or the energy supply request confirmation message or the energy supply release confirmation message to the target base station.

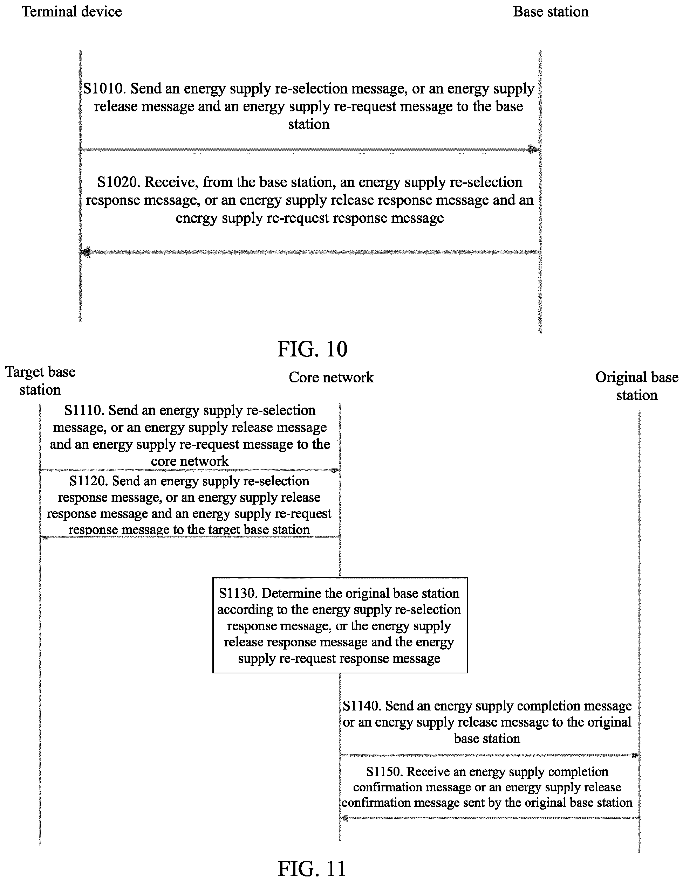

In an embodiment, a process of energy supply re-selection is described using an example where the first communication node is a base station, the second communication node is a terminal device, and the third communication node is a core network. In this embodiment, the terminal device is in a mobile state in the process of energy supply, i.e., the terminal device needs to switch between different energy supply regions or energy supply cells for energy harvesting. FIG. 10 is a schematic interaction diagram of energy supply re-selection according to an embodiment of the present disclosure. As shown in FIG. 10, this embodiment includes the following steps S1010-S1020.

At S 1010, an energy supply re-selection message, or an energy supply release message and an energy supply re-request message is sent to the base station.

At S 1020, an energy supply re-selection response message, or an energy supply release response message and an energy supply re-request response message are received from the base station.

In this embodiment, the terminal device, after leaving a coverage range of an energy supply node, an energy supply region, or an energy supply cell, has not completed energy harvesting and needs to continue energy harvesting. When the terminal device is located in a cell where energy supply can be provided, the terminal device may access the network, and send an energy supply re-selection message or send an energy supply release message and an energy supply re-request message to the network. The network sends an energy supply re-selection response message or sends an energy supply release response message and an energy supply re-request response message to the terminal device.

The energy supply re-selection message indicates that the terminal device has left the energy supply cell or the energy supply region, but has not completed energy harvesting and needs to continue the energy harvesting.

The energy supply re-selection message includes at least one of: a last energy supply result, one or more latest energy supply results, a region or cell providing a latest energy supply, energy supply type information, energy supply periodicity information, energy supply frequency-domain information, energy supply start time information, energy supply end time information, energy supply duration information, energy supply intensity information, a terminal device energy supply level, or terminal device energy supply permission.

The energy supply re-selection response message includes at least one of an energy supply type, a frequency-domain position of an energy supply signal, an energy supply periodicity, energy supply start time, energy supply end time, a duration of an energy supply signal, sequence information of an energy supply signal, energy supply intensity information, transmit power information of an energy supply signal, a beam direction, an energy supply key, an energy supply region indication, or a list of energy supply cells.

The energy supply re-selection message may further include an energy supply request message.

In an embodiment, a process of energy supply re-selection is described using an example where the first communication node is a base station, the second communication node is a terminal device, and the third communication node is a core network. In this embodiment, the terminal device is in a mobile state in the process of energy supply, i.e., the terminal device needs to switch between different energy supply regions or energy supply cells for energy harvesting. FIG. 11 is another schematic interaction diagram of energy supply re-selection according to an embodiment of the present disclosure. As shown in FIG. 11, this embodiment includes the following steps S1110-S1150.

At S1110, an energy supply re-selection message, or an energy supply release message and an energy supply re-request message are sent to the core network.

At S 1120, an energy supply re-selection response message, or an energy supply release response message and an energy supply re-request response message are sent to the target base station.

At S1130, the original base station is determined according to the energy supply re-selection response message, or the energy supply release response message and the energy supply re-request response message.

At S 1140, an energy supply completion message or an energy supply release message is sent to the original base station.

At S 1150, an energy supply completion confirmation message or an energy supply release confirmation message sent by the original base station is received.

In this embodiment, after receiving an energy supply re-selection message sent by the terminal device, the target base station sends the energy supply re-selection message to the core network, and the core network sends an energy supply re-selection response message to the target base station after receiving the energy supply re-selection message;
or after receiving an energy supply request message sent by the terminal device, the target base station sends the energy supply request message to the core network, and the core network sends an energy supply request response message to the target base station after receiving the energy supply request message.

The core network determines the original base station corresponding to the terminal device according to the energy supply re-selection message or the energy supply request message. Alternatively, the core network may determine the original base station according to the terminal device identity information in the energy supply re-selection message or the energy supply request message and a cached mapping relationship between terminal device identity information and corresponding energy supply cells or regions. Alternatively, the core network may determine the original base station corresponding to the terminal device according to cell information in the energy supply re-selection message.

In this embodiment, the core network sends an energy supply release message or an energy supply completion message to the original base station; and the original base station sends an energy supply release confirmation message or an energy supply completion confirmation message to the core network.

In an embodiment, the energy supply release message further includes an energy supply request message; the energy supply release response message includes an energy supply request response message; and
after receiving the energy supply release message, the core network determines the original base station, sends the energy supply release message or the energy supply completion message to the original base station, and sends the energy supply request response message to the target base station.

The energy supply re-selection is mainly used for enabling the terminal device in the mobile state to better perform energy harvesting, to ensure that the terminal device can complete energy harvesting more quickly.

In an embodiment, the terminal device may also perform RRM measurement, beam selection, SSB selection, beam management, cell selection, or cell handover by utilizing an energy supply signal.

In a case where a resource used by the terminal device for transmitting data overlaps a resource where the energy supply signal is located, the terminal device may skip the resource where the energy supply signal is located to perform rate matching using the rate matching mode, or use a discarding (i.e., abandonment) mode to avoid the impact of the energy supply signal on the data transmission, or use a serial interference cancellation mode to reduce the impact of the energy supply signal on the data transmission.

The network side may transmit the energy supply signal through a node such as a base station, a relay, a dedicated energy node, a third-party energy node, etc., to supply energy to the terminal device. The node transmits the energy supply signal according to the information (at least one of an energy supply type, a corresponding resource location of the energy supply signal, sequence information of the energy supply signal, or transmit power information of the energy supply signal) to supply energy to the terminal device.

The network side may provide a plurality of types of energy supply signals, and the corresponding type, transmit power, or time-frequency position of each type of energy supply signal may be independently configured. The plurality of types of energy supply signals may be transmitted by the same node or different nodes.

After the terminal device completes the energy harvesting, or leaves the energy supply network, or leaves the energy supply region provided by the network, the terminal device may immediately access the network and send an energy supply release message or an energy harvesting completion message to the network, or may send the message along with other needs that require accessing the network.

In an embodiment, a process of joint energy supply by multiple nodes is described using an example where the first communication node is a base station, the second communication node is a terminal device, and the third communication node is a core network.

To better supply energy to the terminal device, the network may also coordinate a plurality of nodes to supply energy to the terminal device. The plurality of nodes may be base stations, relays, dedicated energy nodes, etc. The energy supply type and the resource location of the energy supply signal may be exchanged through an interface between the network and the nodes. The energy supply information is also referred to as an energy harvesting message.

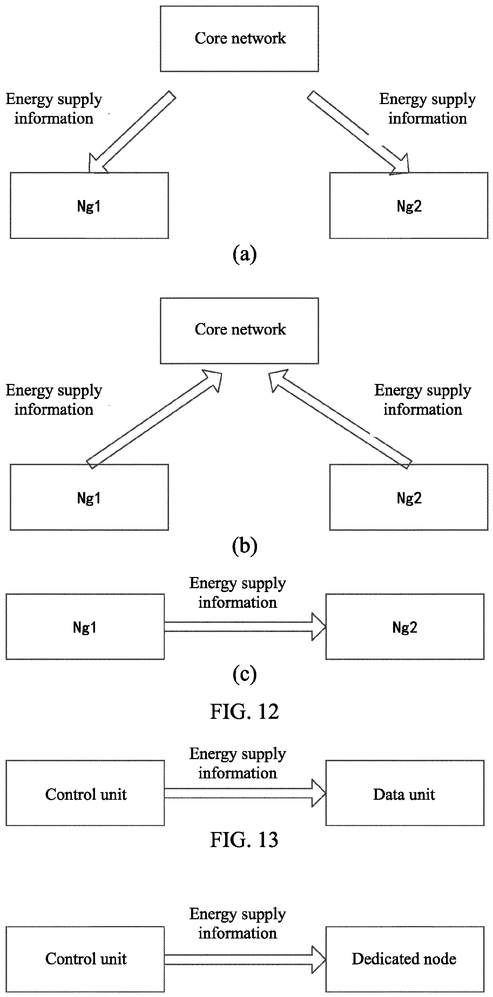

The energy supply nodes may adaptively coordinate to jointly supply energy, i.e., the nodes exchange respective energy supply types and corresponding energy supply signal resource locations through interfaces between the nodes. FIG. 12 is a schematic interaction diagram of energy supply through multi-node coordination according to an embodiment of the present disclosure. As shown in FIG. 12, Ng1 and Ng2 represent two different nodes. In this embodiment, the joint energy supply may be implemented by interaction through interfaces between the network and the nodes (i.e., interaction of the core network with Ng1 and Ng2, as shown in (a) and (b) in FIG. 12); or the joint energy supply may be implemented by adaptive coordination between the two energy supply nodes (i.e., interaction between Ng1 and Ng2, as shown in (c) in FIG. 12).

FIG. 13 is a schematic interaction diagram of joint energy supply performed by a control unit and a data unit according to an embodiment of the present disclosure. In this embodiment, in a scenario where the Control Unit (CU) and the Data Unit (DU) are separated, the information is transmitted between interfaces of the CU and the DU. The CU transmits at least one of an energy supply type, a corresponding energy supply signal resource position, sequence information of an energy supply signal, or transmit power information of an energy supply signal to the DU. The DU transmits the energy supply signal according to the information provided by the CU to supply energy to the terminal device.

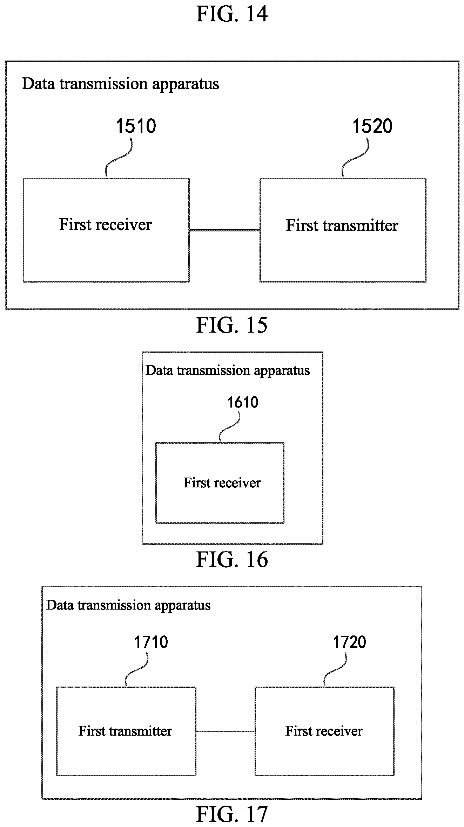

FIG. 14 is a schematic interaction diagram of joint energy supply performed by a control unit and a dedicated node according to an embodiment of the present disclosure. In this embodiment, when the energy supply node is a dedicated node or a third-party node, the base station or the CU transmits at least one of an energy supply type, a corresponding energy supply signal resource position, sequence information of an energy supply signal, or transmit power information of an energy supply signal to the energy supply node through a dedicated interface between the base station or the CU and the energy supply node, and the energy supply node transmits the energy supply signal according to the information to supply energy to the terminal device. The dedicated node in FIG. 14 may be a third-party energy supply node or a network-side energy supply dedicated node.

The third-party node is a node other than a network provider and the terminal device.

In the above embodiments, any message or process from the terminal device to the base station, from the base station to the terminal device, from the base station to the core network, or from the core network to the base station may exist independently, or may be used in combination with other processes or messages.

In an embodiment, FIG. 15 is a structural block diagram of a data transmission apparatus according to an embodiment of the present disclosure. This embodiment is applied to a first communication node. As shown in FIG. 15, the data transmission apparatus applied to the first communication node in this embodiment includes a first receiver 1510 and a first transmitter 1520.

The first receiver 1510 is configured for receiving an energy supply request message sent by a second communication node.

The first transmitter 1520 is configured for sending an energy supply request response message to the second communication node.

In an embodiment, the data transmission apparatus applied to the first communication node further includes:
a second transmitter, configured for sending the energy supply request message to a third communication node.

In an embodiment, the data transmission apparatus applied to the first communication node further includes:
a first transmission module, configured for supplying energy to the second communication node according to the energy supply request response message.

In an embodiment, the data transmission apparatus applied to the first communication node further includes:
a first controller, configured for controlling, according to the energy supply request response message, a fourth communication node to supply energy to the second communication node.

In an embodiment, the data transmission apparatus applied to the first communication node further includes:
a second receiver, configured for receiving the energy supply request response message fed back by a third communication node, before the energy supply request response message is sent to the second communication node.

In an embodiment, the energy supply request message includes at least one of: an energy supply type; energy supply periodicity information; energy supply frequency-domain information; energy supply start time information; energy supply end time information; energy supply duration information; energy supply intensity information; an energy supply level; energy supply permission; a last energy supply result; a plurality of latest energy supply results; or a beam direction of energy supply.

In an embodiment, the first transmitter 1520 is further configured for:
sending an energy supply request confirmation message to the second communication node; or sending an energy supply request rejection message to the second communication node.

In an embodiment, the energy supply request response message further includes at least one of: an energy supply type; a frequency-domain position of an energy supply signal; an energy supply periodicity; energy supply start time; energy supply end time; a duration of an energy supply signal; sequence information of an energy supply signal; a strength of an energy supply signal; a transmit power of an energy supply signal; a beam direction of energy supply; an energy supply key; an energy supply region indication; or a list of energy supply cells.

In an embodiment, the energy supply request message further includes: terminal device identity information.

In an embodiment, a configuration mode of the energy supply key includes one of the following that: an energy supply cell corresponds one-to-one to an energy supply key; one energy supply key corresponds to a plurality of cells; an energy supply region corresponds one-to-one to an energy supply key; or the second communication node corresponds one-to-one to an energy supply key.

In an embodiment, the energy supply type in the energy supply request message or the energy supply request response message includes at least one of an energy supply bandwidth; an energy supply frequency; an energy supply intensity; an energy supply spectrum; or an energy supply mode.

The first communication node includes a control unit and a data unit; and a process of supplying energy to the second communication node includes:
receiving, by the control unit, the energy supply request message sent by the second communication node;
sending, by the control unit, the energy supply request response message to the data unit; and
supplying, by the data unit, energy to the second communication node.

In an embodiment, the data transmission apparatus applied to the first communication node further includes:
a third receiver, configured for receiving an energy supply release message or an energy harvesting completion message sent by the second communication node.

In an embodiment, the data transmission apparatus applied to the first communication node further includes:
a third transmitter, configured for sending the energy supply release message or the energy harvesting completion message to the third communication node; and
a fourth receiver, configured for receiving an energy supply release response message or an energy harvesting completion response message fed back by the third communication node.

In an embodiment, the data transmission apparatus applied to the first communication node further includes:
a fourth transmitter, configured for sending the energy supply release response message or the energy harvesting completion response message to the second communication node.

In an embodiment, the data transmission apparatus applied to the first communication node further includes:
a second transmission module, configured for stopping, according to the energy supply release response message or the energy harvesting completion response message, supplying energy to the second communication node.

In an embodiment, the data transmission apparatus applied to the first communication node further includes:
a second controller, configured for controlling, according to the energy supply release response message or the energy harvesting completion response message, the fourth communication node to stop supplying energy to the second communication node.

In an embodiment, each of the energy supply release message and the energy harvesting completion message includes at least one of energy harvesting status information; terminal device energy status information; or energy charging duration information.

In an embodiment, the energy harvesting status information includes at least one of: energy harvesting status information in time domain; energy harvesting status information of each node; energy harvesting status information of each cell; or energy harvesting efficiency information.

In an embodiment, the energy supply release response message includes: an energy supply release confirmation message; or
the energy harvesting completion response message includes: an energy harvesting completion confirmation message.

In an embodiment, each of the energy supply release message and the energy harvesting completion message further includes at least one of: terminal device identity information; released energy supply region information; or released energy supply cell information.

In an embodiment, the data transmission apparatus applied to the first communication node further includes:
a fifth receiver, configured for receiving, from the second communication node, an energy supply re-selection message, or an energy supply release message and an energy supply re-request message, or an energy supply re-request message.

In an embodiment, the data transmission apparatus applied to the first communication node further includes:
a fifth transmitter, configured for sending the energy supply re-selection message, or the energy supply release message and the energy supply re-request message, or the energy supply re-request message to the third communication node; and
a sixth receiver, configured for receiving, from the third communication node, an energy supply re-selection response message, or an energy supply release response message and an energy supply re-request response message, or an energy supply re-request response message.

In an embodiment, the data transmission apparatus applied to the first communication node further includes:
a third controller, configured for stopping supplying energy to the second communication node, or stopping supplying energy to the second communication node and controlling another first communication node to supply energy to the second communication node, or controlling the fourth communication node to stop supplying energy to the second communication node, according to the energy supply re-selection response message, or the energy supply release response message and the energy supply re-request response message, or the energy supply re-request response message.

In an embodiment, the data transmission apparatus applied to the first communication node further includes:
a feedback module, configured for feeding back an energy supply re-selection response message, or an energy supply release response message and an energy supply re-request response message, or an energy supply re-request response message to the second communication node.

In an embodiment, the energy supply re-selection message includes at least one of one or more latest energy supply results; a region or cell providing a latest energy supply; an energy supply type; energy supply periodicity information; energy supply frequency-domain information; energy supply start time information; energy supply end time information; energy supply duration information; energy supply intensity information; an energy supply level; or energy supply permission.

In an embodiment, the energy supply re-selection response message includes at least one of: an energy supply type; a frequency-domain position of an energy supply signal; an energy supply periodicity; energy supply start time; energy supply end time; a duration of an energy supply signal; sequence information of an energy supply signal; energy supply intensity information; transmit power information of an energy supply signal; a beam direction of energy supply; an energy supply key; an energy supply region indication; or a list of energy supply cells.

The data transmission apparatus provided in this embodiment is configured for implementing the data transmission method applied to the first communication node according to the embodiment shown in FIG. 1. Implementation principles and technical effects of the data transmission apparatus provided in this embodiment are similar to those of the data transmission method according to the embodiment shown in FIG. 1, so the details will not be repeated here.

FIG. 16 is a structural block diagram of another data transmission apparatus according to an embodiment of the present disclosure. In an embodiment, the data transmission apparatus is applied to a fifth communication node. As shown in FIG. 16, the data transmission apparatus applied to the fifth communication node in this embodiment includes a first receiver 1610.

The first receiver 1610 is configured for receiving an energy supply release message or an energy harvesting completion message sent by a second communication node.

In an embodiment, the data transmission apparatus applied to the fifth communication node further includes:
a first transmitter, configured for sending the energy supply release message or the energy harvesting completion message to a third communication node; and
a second receiver, configured for receiving an energy supply release response message or an energy harvesting completion response message fed back by the third communication node.

In an embodiment, the data transmission apparatus applied to the fifth communication node further includes:
a second transmitter, configured for sending the energy supply release response message or the energy harvesting completion response message to the second communication node.

In an embodiment, the data transmission apparatus applied to the fifth communication node further includes:
a first transmission module, configured for stopping, according to the energy supply release response message or the energy harvesting completion response message, supplying energy to the second communication node.

In an embodiment, the data transmission apparatus applied to the fifth communication node further includes:
a controller, configured for controlling, according to the energy supply release response message or the energy harvesting completion response message, a fourth communication node to stop supplying energy to the second communication node.

In an embodiment, each of the energy supply release message and the energy harvesting completion message includes at least one of: energy harvesting status information; terminal device energy status information; or energy charging duration information.

In an embodiment, the energy harvesting status information includes at least one of: energy harvesting status information in time domain; energy harvesting status information of each node; energy harvesting status information of each cell; or energy harvesting efficiency information.

In an embodiment, the energy supply release response message includes: an energy supply release confirmation message; or
the energy harvesting completion response message includes: an energy harvesting completion confirmation message.

In an embodiment, each of the energy supply release message and the energy harvesting completion message further includes at least one of: terminal device identity information; released energy supply region information; or released energy supply cell information.

In an embodiment, the data transmission apparatus applied to the fifth communication node further includes:
a third receiver, configured for receiving, from the second communication node, an energy supply re-selection message, or an energy supply release message and an energy supply re-request message, or an energy supply re-request message.

In an embodiment, the data transmission apparatus applied to the fifth communication node further includes:
a third transmitter, configured for sending the energy supply re-selection message, or the energy supply release message and the energy supply re-request message, or the energy supply re-request message to the third communication node; and
a fourth receiver, configured for receiving, from the third communication node, an energy supply re-selection response message, or an energy supply release response message and an energy supply re-request response message, or an energy supply re-request response message.

In an embodiment, the data transmission apparatus applied to the fifth communication node further includes:
a second transmission module, configured for stopping supplying energy to the second communication node, or stopping supplying energy to the second communication node and controlling another first communication node to supply energy to the second communication node, or controlling the fourth communication node to stop supplying energy to the second communication node, according to the energy supply re-selection response message, or the energy supply release response message and the energy supply re-request response message, or the energy supply re-request response message.

In an embodiment, the data transmission apparatus applied to the fifth communication node further includes:
a feedback module, configured for feeding back an energy supply re-selection response message, or an energy supply release response message and an energy supply re-request response message, or an energy supply re-request response message to the second communication node.

In an embodiment, the energy supply re-selection message includes at least one of one or more latest energy supply results; a region or cell providing a latest energy supply; an energy supply type; energy supply periodicity information; energy supply frequency-domain information; energy supply start time information; energy supply end time information; energy supply duration information; energy supply intensity information; an energy supply level; or energy supply permission.

In an embodiment, the energy supply re-selection response message includes at least one of: an energy supply type; a frequency-domain position of an energy supply signal; an energy supply periodicity; energy supply start time; energy supply end time; a duration of an energy supply signal; sequence information of an energy supply signal; energy supply intensity information; transmit power information of an energy supply signal; a beam direction of energy supply; an energy supply key; an energy supply region indication; or a list of energy supply cells.

In an embodiment, the data transmission apparatus applied to the fifth communication node further includes:
a fourth transmitter, configured for sending the energy supply request message to another first communication node, such that a first communication node and the another first communication node jointly supply energy to the second communication node.

The data transmission apparatus provided in this embodiment is configured for implementing the data transmission method applied to the fifth communication node according to the embodiment shown in FIG. 2. Implementation principles and technical effects of the data transmission apparatus provided in this embodiment are similar to those of the data transmission method according to the embodiment shown in FIG. 2, so the details will not be repeated here.

In an embodiment, FIG. 17 is a structural block diagram of still another data transmission apparatus according to an embodiment of the present disclosure. This embodiment is applied to a second communication node. As shown in FIG. 17, the data transmission apparatus applied to the second communication node in this embodiment includes a first transmitter 1710 and a first receiver 1720.

The first transmitter 1710 is configured for sending an energy supply request message to a first communication node.

The first receiver 1720 is configured for receiving an energy supply request response message, an energy supply request confirmation message, or an energy supply request rejection message sent by the first communication node.

In an embodiment, the data transmission apparatus applied to the second communication node further includes:
a harvesting module, configured for performing energy harvesting according to the energy supply request response message or the energy supply request confirmation message; or
a harvesting abandonment module, configured for abandoning energy harvesting from the first communication node according to the energy supply request rejection message.

In an embodiment, the data transmission apparatus applied to the second communication node further includes:
a second transmitter, configured for sending an energy supply release message or an energy harvesting completion message to the first communication node; or sending an energy supply release message or an energy harvesting completion message to a fifth communication node.

In an embodiment, the second communication node leaves a coverage range of an energy supply node, an energy supply region, or an energy supply cell; and the data transmission apparatus applied to the second communication node further includes:
a third transmitter, configured for sending an energy supply re-selection message, or an energy supply release message and an energy supply re-request message to the first communication node; or
sending an energy supply re-selection message, or an energy supply release message and an energy supply re-request message to a fifth communication node.

In an embodiment, a resource for transmitting data overlaps a resource where an energy supply signal is located; and one of the following processing modes is used: a rate matching mode; an abandonment mode; or a serial interference cancellation mode.

In an embodiment, RRM measurement, SSB selection, beam management, beam selection, cell selection, or cell handover is performed according to an energy supply signal.

The data transmission apparatus provided in this embodiment is configured for implementing the data transmission method applied to the second communication node according to the embodiment shown in FIG. 3. Implementation principles and technical effects of the data transmission apparatus provided in this embodiment are similar to those of the data transmission method according to the embodiment shown in FIG. 3, so the details will not be repeated here.

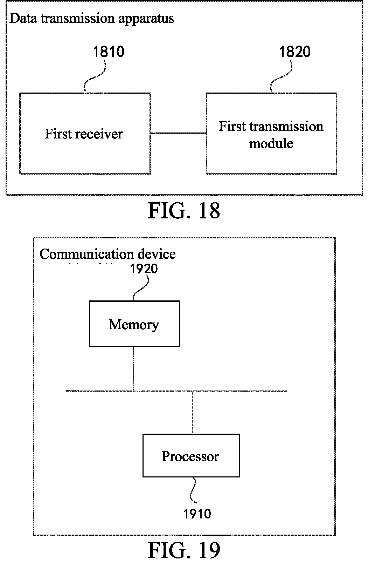

FIG. 18 is a structural block diagram of yet another data transmission apparatus according to an embodiment of the present disclosure. In an embodiment, the data transmission apparatus is applied to a third communication node. As shown in FIG. 18, the data transmission apparatus applied to the third communication node in this embodiment includes a first receiver 1810 and a first transmission module 1820.

The first receiver 1810 is configured for receiving an energy supply request message transmitted by a first communication node.

The first transmission module 1820 is configured for transmitting an energy supply request response message, an energy supply request confirmation message, or an energy supply request rejection message to the first communication node.

In an embodiment, the data transmission apparatus applied to the third communication node further includes:
a second receiver, configured for receiving an energy supply release message or an energy harvesting completion message sent by the first communication node; and
a first feedback module, configured for feeding back an energy supply release response message or an energy harvesting completion response message to the first communication node.

In an embodiment, the data transmission apparatus applied to the third communication node further includes:
a third receiver, configured for receiving an energy supply release message or an energy harvesting completion message sent by a fifth communication node; and
a second feedback module, configured for feeding back an energy supply release response message or an energy harvesting completion response message to the fifth communication node.

In an embodiment, the data transmission apparatus applied to the third communication node further includes:
a fourth receiver, configured for receiving, from the first communication node, an energy supply re-selection message, or an energy supply release message and an energy supply re-request message, or an energy supply re-request message; and
a second transmission module, configured for transmitting an energy supply re-selection response message, or an energy supply release response message and an energy supply re-request response message, or an energy supply re-request response message to the first communication node.

In an embodiment, the data transmission apparatus applied to the third communication node further includes:
a fifth receiver, configured for receiving, from the fifth communication node, an energy supply re-selection message, or an energy supply release message and an energy supply re-request message, or an energy supply re-request message; and
a third transmission module, configured for transmitting an energy supply re-selection response message, or an energy supply release response message and an energy supply re-request response message, or an energy supply re-request response message to the fifth communication node.

In an embodiment, the data transmission apparatus applied to the third communication node further includes:
a fourth transmission module, configured for controlling, by the third communication node, a fourth communication node to supply energy to a second communication node; or
controlling, by the third communication node, a fourth communication node to stop supplying energy to a second communication node, and controlling another fourth communication node to supply energy to the second communication node.

In an embodiment, the data transmission apparatus applied to the third communication node further includes:
a fifth transmission module, configured for transmitting the energy supply request message or an energy supply configuration message to another first communication node.

The data transmission apparatus provided in this embodiment is configured for implementing the data transmission method applied to the third communication node according to the embodiment shown in FIG. 4. Implementation principles and technical effects of the data transmission apparatus provided in this embodiment are similar to those of the data transmission method according to the embodiment shown in FIG. 4, so the details will not be repeated here.

FIG. 19 is a schematic structural diagram of a communication device according to an embodiment of the present disclosure. As shown in FIG. 19, the device provided by the present disclosure includes a processor 1910 and a memory 1920. The device may include one or more processors 1910. FIG. 19 uses one processor 1910 as an example. The device may include one or more memories 1920. FIG. 19 uses one memory 1920 as an example. The processor 1910 and the memory 1920 in the device may be connected by a bus or in other ways. Connection by a bus is used as an example in FIG. 19. In this embodiment, the device may be a network side.

The memory 1920, as a computer-readable storage medium, may be configured for storing a software program, a computer-executable program, and modules, for example, program instructions/modules corresponding to the device according to any embodiment of the present disclosure (for example, the first receiver 1510 and first transmitter 1520 in the data transmission apparatus). The memory 1920 may include a program storage area and a data storage area. The program storage area may store an operating system, and an application required by at least one function. The data storage area may store data created according to the use of the device and the like. In addition, the memory 1920 may include a high-speed random access memory, and may also include a nonvolatile memory, e.g., at least one magnetic disk storage device, flash memory device, or other nonvolatile solid-state storage device. In some examples, the memory 1920 may further include memories located remotely from the processor 1910, and the remote memories may be connected to the device via a network. Examples of the network include, but not limited to, the Internet, an intranet, a local area network, a mobile communication network, and combinations thereof.

When the communication device is a first communication node, the device provided above may be configured for executing the data transmission method applied to a first communication node according to any one of the above embodiments, and has corresponding functions and effects.

When the communication device is a fifth communication node, the device provided above may be configured for executing the data transmission method applied to a fifth communication node according to any one of the above embodiments, and has corresponding functions and effects.

When the communication device is a second communication node, the device provided above may be configured for executing the data transmission method applied to a second communication node according to any one of the above embodiments, and has corresponding functions and effects.

When the communication device is a third communication node, the device provided above may be configured for executing the data transmission method applied to a third communication node according to any one of the above embodiments, and has corresponding functions and effects.

An embodiment of the present disclosure provides a storage medium, containing a computer-executable instruction which, when executed by a processor of a computer, causes the processor of the computer to implement a data transmission method applied to a first communication node, the method including: receiving an energy supply request message sent by a second communication node; and sending an energy supply request response message to the second communication node.

An embodiment of the present disclosure provides a storage medium, containing a computer-executable instruction which, when executed by a processor of a computer, causes the processor of the computer to implement a data transmission method applied to a fifth communication node, the method including: receiving an energy supply release message or an energy harvesting completion message sent by a second communication node.

An embodiment of the present disclosure provides a storage medium, containing computer-executable instruction which, when executed by a processor of a computer, causes the processor of the computer to implement a data transmission method applied to a second communication node, the method including: sending an energy supply request message to a first communication node; and receiving an energy supply request response message, an energy supply request confirmation message, or an energy supply request rejection message sent by the first communication node.

An embodiment of the present disclosure provides a storage medium, containing computer-executable instruction which, when executed by a processor of a computer, causes the processor of the computer to implement a data transmission method applied to a third communication node, the method including: sending an energy supply request message to a first communication node; and receiving an energy supply request response message, an energy supply request confirmation message, or an energy supply request rejection message sent by the first communication node.

As will be understood by those having ordinary skills in the art, the term "user equipment" encompasses any suitable type of wireless user equipment, such as a mobile telephone, portable data processing device, portable web browser or vehicle-mounted mobile station.

In general, the various embodiments of the present disclosure may be implemented in hardware or special purpose circuits, software, logic, or any combination thereof. For example, some aspects may be implemented in hardware, while other aspects may be implemented in firmware or software that can be executed by a controller, microprocessor or other computing device, but the present disclosure is not limited thereto.

The embodiments of the present disclosure may be implemented by the execution of computer program instructions by a data processor of a mobile device, for example, in a processor entity, or by hardware, or by a combination of software and hardware. The computer program instructions may be assembly instructions, Instruction Set Architecture (ISA) instructions, machine instructions, machine dependent instructions, microcode, firmware instructions, state setting data, or source code or object code written in any combination of one or more programming languages.

The block diagram of any logic flow in the accompanying drawings of the present disclosure may represent program steps, or may represent interconnected logic circuits, modules and functions, or may represent a combination of program steps and logic circuits, modules and functions. The computer program may be stored in a memory. The memory may be of any type suitable for the local technical environment and may be implemented using any suitable data storage technology, such as, but not limited to, Read-Only Memory (ROM), Random Access Memory (RAM), and optical storage devices and systems (Digital Video Disc (DVD) or Compact Disk (CD)), etc. The computer-readable medium may include a non-transitory storage medium. The data processor may be of any type suitable for the local technical environment, such as, but not limited to, a general purpose computer, a special purpose computer, a microprocessor, a Digital Signal Processor (DSP), an Application Specific Integrated Circuit (ASIC), a programmable logic device (Field-Programmable Gate Array (FPGA)), and a processor based on a multi-core processor architecture.

The above description is only some embodiments of the present disclosure, and is not intended to limit the present disclosure. It should be understood by those having ordinary skills in the art, various modifications and variations may be made to the present disclosure. Any modifications, equivalent replacements, and improvements made within the protection scope and principle of the present disclosure shall fall within the scope of the present disclosure.

## Claims

1. A data transmission method, applied to a first communication node, the method comprising:
receiving an energy supply request message sent by a second communication node; and
sending an energy supply request response message to the second communication node.

2. The method of claim 1, further comprising:
sending the energy supply request message to a third communication node.

3. The method of claim 1, further comprising:
supplying energy to the second communication node according to the energy supply request response message.

4. The method of claim 1, further comprising:
controlling, according to the energy supply request response message, a fourth communication node to supply energy to the second communication node.

5. The method of claim 1, wherein before sending an energy supply request response message to the second communication node, the method further comprises:
receiving an energy supply request response message fed back by a third communication node.

6. The method of any of claims 1 to 5, wherein the energy supply request message comprises at least one of an energy supply type; energy supply periodicity information; energy supply frequency-domain information; energy supply start time information; energy supply end time information; energy supply duration information; energy supply intensity information; an energy supply level; energy supply permission; a last energy supply result; a plurality of latest energy supply results; or a beam direction of energy supply.

7. The method of any of claims 1 to 5, wherein sending an energy supply request response message to the second communication node comprises:
sending an energy supply request confirmation message to the second communication node; or
sending an energy supply request rejection message to the second communication node.

8. The method of any of claims 1 to 5, wherein the energy supply request response message further comprises at least one of an energy supply type; a frequency-domain position of an energy supply signal; an energy supply periodicity; energy supply start time; energy supply end time; a duration of an energy supply signal; sequence information of an energy supply signal; a strength of an energy supply signal; a transmit power of an energy supply signal; a beam direction of energy supply; an energy supply key; an energy supply region indication; or a list of energy supply cells.

9. The method of claim 1, wherein the energy supply request message further comprises: terminal device identity information.

10. The method of claim 8, wherein a configuration mode of the energy supply key comprises one of the following that: an energy supply cell corresponds one-to-one to an energy supply key; one energy supply key corresponds to a plurality of cells; an energy supply region corresponds one-to-one to an energy supply key; or the second communication node corresponds one-to-one to an energy supply key.

11. The method of claim 1, wherein the energy supply type in the energy supply request message or the energy supply request response message comprises at least one of an energy supply bandwidth; an energy supply frequency; an energy supply intensity; an energy supply spectrum; or an energy supply mode.

12. The method of claim 1, wherein the first communication node comprises a control unit and a data unit; and a process of supplying energy to the second communication node comprises:
receiving, by the control unit, the energy supply request message sent by the second communication node;
sending, by the control unit, the energy supply request response message to the data unit; and
supplying, by the data unit, energy to the second communication node.

13. The method of claim 1, further comprising:
receiving an energy supply release message or an energy harvesting completion message sent by the second communication node.

14. A data transmission method, applied to a fifth communication node, the method comprising:
receiving an energy supply release message or an energy harvesting completion message sent by a second communication node.

15. The method of claim 13 or 14, further comprising:
sending the energy supply release message or the energy harvesting completion message to a third communication node; and
receiving an energy supply release response message or an energy harvesting completion response message fed back by the third communication node.

16. The method of claim 15, further comprising:
sending the energy supply release response message or the energy harvesting completion response message to the second communication node.

17. The method of claim 15, further comprising:
stopping, according to the energy supply release response message or the energy harvesting completion response message, supplying energy to the second communication node.

18. The method of claim 15, further comprising:
controlling, according to the energy supply release response message or the energy harvesting completion response message, a fourth communication node to stop supplying energy to the second communication node.

19. The method of claim 13 or 14, wherein each of the energy supply release message and the energy harvesting completion message comprises at least one of: energy harvesting status information; terminal device energy status information; or energy charging duration information.

20. The method of claim 19, wherein the energy harvesting status information comprises at least one of energy harvesting status information in time domain; energy harvesting status information of each node; energy harvesting status information of each cell; or energy harvesting efficiency information.

21. The method of claim 15, wherein the energy supply release response message comprises: an energy supply release confirmation message; or
the energy harvesting completion response message comprises: an energy harvesting completion confirmation message.

22. The method of claim 13 or 14, wherein each of the energy supply release message and the energy harvesting completion message further comprises at least one of terminal device identity information; released energy supply region information; or released energy supply cell information.

23. The method of claim 1 or 14, further comprising:
receiving, from the second communication node, an energy supply re-selection message, or an energy supply release message and an energy supply re-request message, or an energy supply re-request message.

24. The method of claim 23, further comprising:
sending the energy supply re-selection message, or the energy supply release message and the energy supply re-request message, or the energy supply re-request message to a third communication node; and
receiving, from the third communication node, an energy supply re-selection response message, or an energy supply release response message and an energy supply re-request response message, or the energy supply re-request response message.

25. The method of claim 24, further comprising:
stopping supplying energy to the second communication node, or stopping supplying energy to the second communication node and controlling another first communication node to supply energy to the second communication node, or controlling a fourth communication node to stop supplying energy to the second communication node, according to the energy supply re-selection response message, or the energy supply release response message and the energy supply re-request response message, or the energy supply re-request response message.

26. The method of claim 24, further comprising:
feeding back an energy supply re-selection response message, or an energy supply release response message and an energy supply re-request response message, or an energy supply re-request response message to the second communication node.

27. The method of claim 23, wherein the energy supply re-selection message comprises at least one of: one or more latest energy supply results; a region or cell providing a latest energy supply; an energy supply type; energy supply periodicity information; energy supply frequency-domain information; energy supply start time information; energy supply end time information; energy supply duration information; energy supply intensity information; an energy supply level; or energy supply permission.

28. The method of any of claims 24 to 26, wherein the energy supply re-selection response message comprises at least one of: an energy supply type; a frequency-domain position of an energy supply signal; an energy supply periodicity; energy supply start time; energy supply end time; a duration of an energy supply signal; sequence information of an energy supply signal; energy supply intensity information; transmit power information of an energy supply signal; a beam direction of energy supply; an energy supply key; an energy supply region indication; or a list of energy supply cells.

29. The method of claim 1 or 14, further comprising:
sending the energy supply request message to another first communication node, such that the first communication node and the another first communication node jointly supply energy to the second communication node.

30. A data transmission method, applied to a second communication node, the method comprising:
sending an energy supply request message to a first communication node; and
receiving an energy supply request response message, an energy supply request confirmation message, or an energy supply request rejection message sent by the first communication node.

31. The method of claim 30, further comprising:
performing energy harvesting according to the energy supply request response message or the energy supply request confirmation message; or
abandoning energy harvesting from the first communication node according to the energy supply request rejection message.

32. The method of claim 30, further comprising:
sending an energy supply release message or an energy harvesting completion message to the first communication node; or sending an energy supply release message or an energy harvesting completion message to a fifth communication node.

33. The method of claim 30, wherein the second communication node leaves a coverage range of an energy supply node, an energy supply region, or an energy supply cell; and the method further comprises:
sending an energy supply re-selection message, or an energy supply release message and an energy supply re-request message to the first communication node;
or
sending an energy supply re-selection message, or an energy supply release message and an energy supply re-request message to a fifth communication node.

34. The method of claim 30, wherein a resource for transmitting data overlaps a resource where an energy supply signal is located; and one of the following processing modes is used: a rate matching mode; an abandonment mode; or a serial interference cancellation mode.

35. The method of claim 30, wherein performing Radio Resource Management (RRM) measurement, Synchronization Signal and Physical Broadcast Channel (PBCH) Block (SSB) selection, beam management, beam selection, cell selection, or cell handover according to an energy supply signal.

36. A data transmission method, applied to a third communication node, the method comprising:
receiving an energy supply request message transmitted by a first communication node; and
transmitting an energy supply request response message, an energy supply request confirmation message, or an energy supply request rejection message to the first communication node.

37. The method of claim 36, further comprising:
receiving an energy supply release message or an energy harvesting completion message sent by the first communication node; and
feeding back an energy supply release response message or an energy harvesting completion response message to the first communication node.

38. The method of claim 36, further comprising:
receiving an energy supply release message or an energy harvesting completion message sent by a fifth communication node; and
feeding back an energy supply release response message or an energy harvesting completion response message to the fifth communication node.

39. The method of claim 36, further comprising:
receiving, from the first communication node, an energy supply re-selection message, or an energy supply release message and an energy supply re-request message, or an energy supply re-request message; and
transmitting an energy supply re-selection response message, or an energy supply release response message and an energy supply re-request response message, or an energy supply re-request response message to the first communication node.

40. The method of claim 36, further comprising:
receiving, from a fifth communication node, an energy supply re-selection message, or an energy supply release message and an energy supply re-request message, or an energy supply re-request message; and
transmitting an energy supply re-selection response message, or an energy supply release response message and an energy supply re-request response message, or an energy supply re-request response message to the fifth communication node.

41. The method of claim 36 or 40, further comprising:
controlling, by the third communication node, a fourth communication node to supply energy to a second communication node; or
controlling, by the third communication node, a fourth communication node to stop supplying energy to the second communication node, and controlling another fourth communication node to supply energy to the second communication node.

42. The method of claim 36, further comprising:
transmitting the energy supply request message or an energy supply configuration message to another first communication node.

43. A communication device, comprising: a memory and one or more processors, wherein:
the memory is configured for storing one or more programs; and
the one or more programs, when executed by the one or more processors, cause the one or more processors to carry out the method of any of claims 1 to 13, claims 14 to 29, claims 30 to 35, or claims 36 to 42.

44. A storage medium, storing a computer program which, when executed by a processor, causes the processor to carry out the method of any of claims 1 to 13, claims 14 to 29, claims 30 to 35, or claims 36 to 42.
